# EUROPEAN PATENT SPECIFICATION

(11) **EP 0 414 683 B1**
(45) Date of publication and mention of the grant of the patent: **27.09.1995**
(21) Application number: 88908845.6
(22) Date of filing: 11.05.1988
(51) Int. Cl.: B29C 43/16, B29C 55/12, B29C 55/18

(54) **METHODS OF PRODUCING BIAXIALLY ORIENTED POLYMER PRODUCT, AND THE PRODUCT PRODUCED THEREBY**
VERFAHREN ZUR HERSTELLUNG VON BIAXIAL ORIENTIERTEN POLYMERERZEUGNISSEN UND SO HERGESTELLTES ERZEUGNIS
PROCEDES POUR FABRIQUER UN PRODUIT POLYMERE A ORIENTATION BIAXIALE, ET PRODUIT AINSI OBTENU

(43) Date of publication of application: 06.03.1991
(73) Proprietor: ALUMINUM COMPANY OF AMERICA, Pittsburgh, PA 15219 (US)
(72) Inventor: LO, Ying-Cheng, Mundelein, IL 60060 (US); HUMPHRIES, Darral, V., Allentown, PA 18103 (US)
(74) Representative: Wablat, Wolfgang, Dr.Dr.
(86) International application number: PCT/US88/01569
(87) International publication number: WO 89/10828

(56) References cited:
- EP-A- 0 226 434
- US-A- 3 714 320
- US-A- 3 852 387
- US-A- 4 235 834
- US-A- 4 595 550
- US-A- 4 629 650

## Description

### Background of the Invention

The instant invention relates to methods of producing biaxially oriented polymer product and to the product produced thereby. More particularly, the instant invention is directed to methods of producing such a product by continuous forging, wherein polymer feedstock is advanced between a pair of opposed belts.

Biaxially oriented polymers, such as the polypropylene polymers sold under the trademark BEXOR, have numerous advantages over unoriented polymers in that they have higher strength, improved stiffness, increased toughness and superior thermoformability. Biaxially oriented polymers have been successfully produced using the techniques disclosed in U.S. Patent 4,282,277, the disclosure of which is incorporated herein by reference, assigned to the assignee of the instant invention, wherein a tubular product is initially produced by hydrostatic extrusion using a mandrel in combination with a conical die. The tubular product is then cut, flattened and annealed utilizing expensive flattening and annealing equipment. While the mandrel-conical die approach results in excellent biaxial orientation of structures, it is necessary to expend considerable effort to remove residual curvature in the resulting sheet. Even when the curvature has been removed by reconfiguring the extruded tube into a flat sheet, residual and unbalanced stresses and strains in the original tube tend to subsequently reassert themselves, resulting in difficulties when using the sheet.

In addition, the cost of the biaxially oriented sheet produced in accordance with the teachings of U.S. Patent 4,282,277 (EP-A-0226434) is relatively high, since only a single billet may be extruded at a time and intermittent production results in high yield losses. In addition, it has proved expensive and difficult to keep the mandrel properly aligned within the die and to produce uniform sheet during the extrusion process.

In order to avoid the expense of first forming a tube and subsequently slitting and flattening the tube to form a biaxially oriented sheet, the inventors of the instant invention explored extruding polymers while in the solid state utilizing dies with protrusions therein as is set forth in U.S. Patent Application Ser. No. 806,994, filed December 9, 1985. Utilizing protrusions within flat dies overcomes the non-uniformity which ordinarily occurs in flat dies due to friction between the workpiece and the die. While this approach results in a product which does not have to be slit and flattened before producing sheet, the process is an intermittent one, wherein the sheets are produced one at a time, as opposed to a continuous process. Moreover, utilization of a stationary die requires a very large machine, which can withstand required extrusion pressures on the order of 10,000 psi (703 kg/cm²) or more. In actual experiments, pressures of 7,000 psi (492 kg/cm²) were required for flat dies having protrusions whereas pressures of only 1200 psi (84.4 kg/cm²) were required for twin-belt machines. Due to high extrusion pressures, flat die machines require an initial capital outlay much greater than twin-belt machines.

While biaxially oriented sheet can be produced by platen forging and cross-rolling, each of these processes has the drawback of being a batch process as opposed to a continuous process and therefore has serious size and economic limitations. Consequently, it is difficult to produce elongated sheets of material. In addition, with a sheet forged between parallel platens, the sheet must be produced from a circular blank in order to have uniform biaxial orientation. The blank must then be trimmed which adds an additional step and wastes material. While sheets produced by cross-rolling have a roughly rectangular shape, they exhibit wavy surfaces resulting from non-uniform elastic springback of sheet emerging from the roll nip and consequently are not necessarily suitable for subsequent shaping and forming. Moreover, due to short deformation times in cross rolling, the resulting elastic springback leads to a reduction of desirable properties such as stiffness.

Pursuing the opposed-belt concept, the inventors of the instant invention investigated utilizing a twin belt annealing press of the type generally used in the manufacture of items such as particle board, wherein wood particles or fibers are pressed together in the presence of a bonding agent to create sheets of material. This type of process is practiced at lower pressures than those required to biaxially orient polymers and was proved by tests to be unsatisfactory. The inventors also explored twin-belt machines used for producing metal sheet or slab by continuous casting. However, continuous casting machines only require sufficient pressure to retain the melt being processed thereby. In these types of machines, molten material is deposited between a pair of converging belts and spreads laterally and longitudinally between the belts in order to continuously produce a metallic sheet product. The same general approach is used in U.S. Patent 3,852,387 to manufacture plastic sheet wherein a viscous extruded melt is pressed between converging belts.
In view of the inadequacy of these approaches, there appears to be little promise in utilizing existing opposed belt approaches for biaxially orienting feedstock to produce biaxially oriented polymer sheet.

### Summary of the Invention

In view of the aforementioned difficulties encountered in producing biaxially oriented polymer product by a continuous process as opposed to an intermittent process, it is an object of the instant invention both to provide methods of producing such product by continuous forging and to provide the product itself.

The instant invention contemplates a method of producing biaxially oriented polymer product, such as polymer sheet, by introducing a solid workpiece of polymer feedstock in an axial direction between a pair of moving opposed endless surfaces which converge in a downstream direction.

The surfaces, which may be in the form of belts, converge toward one another at an angle in an approximate range greater than zero degrees and less than six degrees, depending on numerous factors such as polymer composition, surface friction, workpiece width and thickness and workpiece temperature. In this converging zone, sufficient support is provided for the belt surfaces to overcome the compressive deformation resistance of the polymer feedstock. The feedstock is simultaneously elongated in a longitudinal direction while spreading in a lateral direction as it is reduced in thickness. By such a process, the material is advanced between the surfaces due to frictional engagement of the surfaces with the workpiece and emerges at the end of the deformation zone as biaxially oriented sheet at the same speed as the surfaces. The temperature of the workpiece is maintained between the glass transition temperature and the viscous flow temperature thereof during deformation and the surfaces under conditions which equalize the surface friction effect and the internal resistance to compressive flow of the polymer. Immediately after the workpiece has been reduced in thickness, it is restrained for a period of time and at a temperature sufficient to stabilize the morphology thereof through crystallization or crosslinking so that the product remains stable subsequent to the biaxial-orientation production.

Preferably, the material and surfaces are heated to a temperature level above the glass transition temperature of the polymer, but below the temperature at which viscous flow occurs and maintained in this temperature range during deformation of the workpiece while the product is either cooled during the restraining step or heated to permit stabilization of the structure through crystallization or crosslinking.

Preferably, the polymer is selected from a semi-crystalline group of materials including polypropylene, polyethylene, ultra-high molecular weight polyethylene, polyacetal, polyamide, polyethylene terephthalate and polybutylene terephthalate. The polymer could also be selected from an amorphous group of materials including polyvinyl chloride, polystyrene, polymethylmethacrylate, polycarbonate and polyethylene terephthalate. The aforementioned polymers can also be biaxially oriented with up to 60% by weight of fillers such as calcium carbonate, talc, mica, or alumina trihydrate. Fillers which render sheets fire proof or fire retardant, e.g., those comprising aluminum trihydrate, can be used to form structural panels, e.g., for aircraft interiors, which heretofore was not possible because sheets formed from such filled polymers lacked sufficient flexural and impact strength to be utilizable for such purposes.

Apparatus for practicing the methods of the instant invention include a continuous forging machine in the form of a twin-belt press having a pair of temperature controlled, opposed belts which converge to biaxially orient the polymer in a first region. The first region includes a pair of opposed platens to support the belts and maintain the correct inter-belt spacing. The opposed belts may also extend through a second region in which the sheet, which has been biaxially oriented by continuous forging, is stabilized while restrained between the belts.

It is also proposed to utilize an arrangement wherein a pair of converging belts, supported by convex rollers or platen sections, continuously squeeze feedstock while biaxially orienting the feedstock to create biaxially oriented sheet. With this approach, the support system imparts a convex surface to the belt which compensates for the surface friction effect on the workpiece and produces a sheet which is uniformly biaxially oriented across its width.

The use of belts, contoured or flat, may not always be sufficient to obtain uniform biaxial orientation of all polymers such as thermoplastic polyesters, polyamides and polymethylmethacrylate which have a relatively high coefficient of friction against metals. In these cases, it is proposed to employ a lubricating film between the polymer and the belts to assure uniform spreading and biaxial orientation. Such a lubricating film may be provided in several ways. For example, a flow additive may be compounded into the polymer feedstock or a surface film of a low friction polymer, such as polyethylene, may be interposed between the polymer feedstock and the belts. A high temperature, chemically inert lubricating substance may be brushed or otherwise applied to the polymer surface prior to deformation.

The novel polymer sheet has planar surfaces, is semi-crystalline or amorphous and has a density equal to or higher than that of the unoriented polymer form which it is produced. The sheet has a uniform distribution of deformed crystalline aggregates in a matrix of deformed amorphous molecules, or has deformed amorphous molecules only, through the thickness thereof with substantially uniform strain distributed throughout the sheet.

Upon further study of the specification and appended claims, further objects and advantages of this invention will become apparent to those skilled in the art.

### Brief Description of the Drawings

Various other objects, features and attendant advantages of the present invention will be more fully appreciated as the same becomes better understood when considered in conjunction with the accompanying drawings, in which like reference characters designate the same or similar parts throughout the several views, and wherein:
Figure 1A is a side view of apparatus for practicing the method of the instant invention, the apparatus being used to produce biaxially oriented sheet having a new and improved structure;
Figure 1B is a continuation of Figure 1A, showing the sheet produced by the apparatus of Figure 1A being restrained while being further annealed and/or cooled;
Figure 1C is a top view of the apparatus of Figure 1B, showing in dotted lines a platen oil seal used when restraining the sheet while the sheet is being annealed and/or cooled;
Figure 2 is a top view of a portion of the apparatus of Figure 1, showing the process by which polymer feedstock is biaxially oriented and converted into stable biaxially oriented sheet;
Figure 3 is a cross-section of Figure 1, showing dimensions with exaggerated thickness of feedstock entering the apparatus of Figure 1;
Figure 4 is a cross-section of Figure 1, showing the feedstock of Figure 3 with exaggerated thickness bang biaxially oriented by the apparatus of Figure 1;
Figure 5 is a cross-section of Figure 1, showing feedstock with exaggerated thickness after it has been biaxially oriented;
Figure 6 is a cross-section of Figure 1, showing the sheet with exaggerated thickness being restrained as it is cooled and/or annealed while being advanced;
Figure 7 is a cross-section of the biaxially oriented sheet with exaggerated thickness as the sheet emerges from the apparatus of Figure 1 prior to further annealing and/or cooling which takes place in Figures 1B and 1C;
Figure 8 is a cross-sectional view through another embodiment of the invention wherein a convex platen is used to impart a convex profile to at least one of the belts as the belt spreads the feedstock;
Figure 9 is a perspective view of a square coupon of semi-crystalline, unoriented polymer prior to biaxial-orientation thereof;
Figure 10 is a perspective view of the coupon of Figure 9, after biaxial-orientation, showing the conversion of spherulites into flat, platelike structures; and

### Description of the Preferred Embodiments

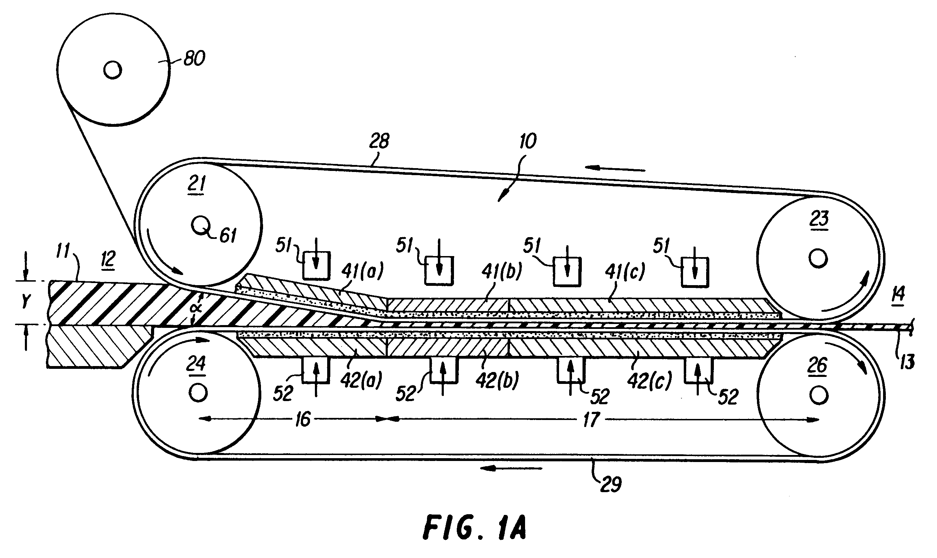

Referring now to Figure 1A, there is shown a twin-belt press, designated generally by the numeral 10, configured in accordance with the principles of the instant invention. The twin-belt press 10 receives polymer feedstock, designated generally by the numeral 11, at its upstream end 12 and dispenses biaxially oriented sheet 13 at its downstream end 14. The twin-belt press 10 has a working region 16 which biaxially orients the feedstock 11 and a restraining region 17 which restrains the biaxially oriented feedstock as the feedstock is annealed and/or cooled so that the resulting sheet 13 is planar and stable.

Ideally, the workpiece 11 is produced just upstream of the twin-belt machine 10 of Figure 1A by feeding pellets (not shown) of the workpiece material into an extruder (not shown), extruding the workpiece, cooling the workpiece (not shown) and feeding the workpiece directly into the twin-belt machine 10 as a continuous body. Alternatively, the workpiece 11 can be made continuous by heat welding billets end-to-end (not shown) just prior to feeding the workpiece into the twin belt machine.

The twin-belt press 10 includes two upper rollers 21 and 23 and two lower rollers 24 and 26 opposing the upper rollers. Trained around the upper rollers 21 and 23 is a metal belt 28, while trained around the lower rollers 24 and 26 is a belt 29. The belts 28 and 29 are preferably made of chrome plated steel, are seamless, and have a hardness of at least 45 Rockwell C. As is seen in Figure 1A, the portions of the belts 28 and 29 between the rollers 21 and 24 in the working region 16, are urged into substantially uniform engagement with the feedstock 11 by a pair of opposed upper and lower platens 41(a) and 42(a), respectively. The angle α between the belts 28 and 29 in the first region 16 is in the approximate range of greater than zero degrees and less than six degrees.

The optimum angle α for producing balanced biaxial orientation is a function of the thickness of the polymer feedstock 11, the width thereof, the polymer composition, and the desired orientation ratio. For polypropylene feed stock 0.5 inches (12.7 mm) thick and 6 inches (15.2 cm) wide, the angle α for a balanced biaxial orientation ratio of 2.2-2.5 is typically in the range of 2.48 degrees to 3.14 degrees. The specific angles α for particular materials are derived by an experimental program designed to define the effects of temperature, surface friction, polymer composition and orientation ratio desired.

By conventional means, the rollers 21 and 24 are heated to a temperature between the glass transition temperature of the polymer and temperature of viscous flow of the feedstock 11. Preferably, the feedstock 11 is also heated to a temperature above the glass transition temperature, but below the temperature of viscous flow prior to passing the feedstock through the first region 16. Generally, if the feedstock 11 being biaxially oriented is polypropylene, it will be heated to approximately 140-160°C, as will the platens 41(a) and 42(a) and the rollers 21 and 24. The temperature rise upon working the feedstock 11 does exceed the viscous flow temperature of polypropylene.

Control of the relative temperatures of the surfaces and the feedstock within the overall temperature range as defined above, is an essential parameter in equalizing the surface friction and flow resistance of the polymer thereby achieving substantially uniform through-the-thickness, biaxial orientation. For example, in the case of polypropylene, it has been shown that substantially uniform, biaxial orientation is achieved when the surfaces are heated to about 160°C and the workpiece to about 146°C.

With the twin-belt machine 10 there is a constant belt velocity from the inlet end 12 of the machine to the outlet end 14. Accordingly, the twin-belt machine 10 diminishes longitudinal sliding friction which is not caused by deformation of the work piece 11. Longitudinal sliding friction occurs with the flat or conical die approach when feedstock is pushed through the dies. Frictional forces which occur between the belts 28 and 29 and feedstock 11 are created by spreading the feedstock polymer. These forces are substantially less than the sliding frictional forces which occur when solid-state extruding the feedstock 11 by urging it through a stationary die.

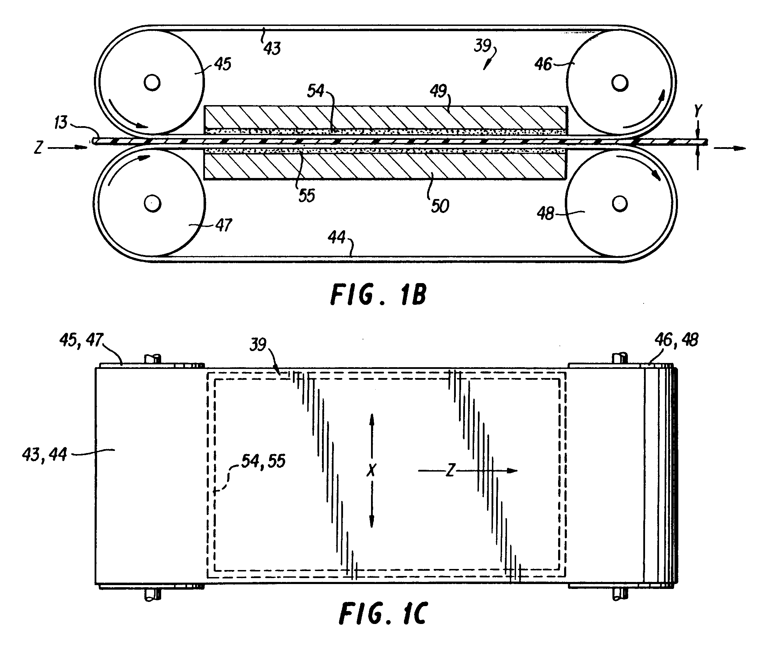

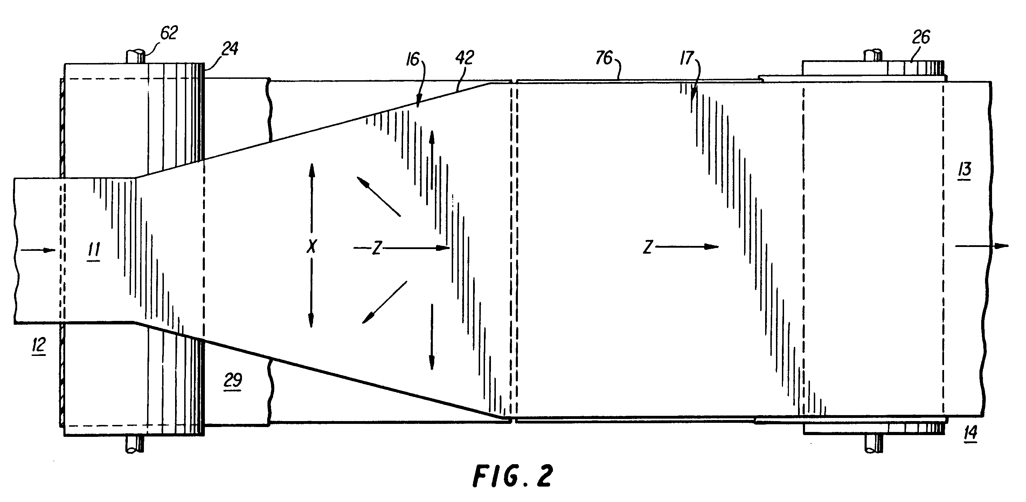

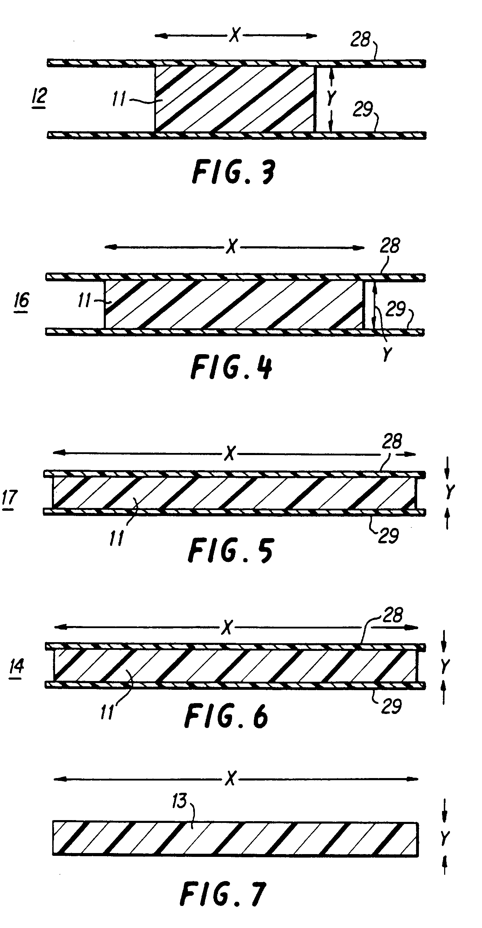

Referring now to Figures 2-7 in conjunction with Figures 1A, 1B and 1C, the relative dimensions of the feedstock 11 are shown as the feedstock is worked to produce the sheet 13. As is seen in Figure 3, the feedstock 11 enters between the nip of rollers 21 and 24 having a relatively thick vertical dimension Y and relatively narrow width X.

As the feedstock 11 advances through the working region 16 (Figure 4), the Y dimension decreases and the lateral X dimension increases, as does the Z dimension by backflow against the belt surfaces (see Figure 2). When the feedstock 11 reaches the end of the working region 16, it has spread in the X direction to a degree sufficient to extend substantially completely across the belts 28 and 29.

As is seen in Figures 5 and 6, the feedstock 11 retains its dimensions as it advances through the restraining region 17. The restraining region 17 includes two pairs of opposed platens 41(b)-42(b) and 41(c)-42(c) for heat treating the workpiece 11 after it has been spread laterally and reduced in vertical cross-section in the working region 16. In the restraining zone 17, the platens 41(b)-42(b) may be heated for annealing the workpiece 11 or may be cooled to fix the structure of the workpiece. When the workpiece 11 is a crosslinkable polymer such as polypropylene, the platen pair 41(a)-42(a) is heated to anneal the workpiece, while the platen pair 41(c)-42(c) is cooled to stabilize the structure of the workpiece. As is seen in Figure 7, the feedstock 11 emerges from the downstream end 14 of the twin belt press 10 as the finished sheet 13 which has a stable, planar configuration.

Biaxally oriented polymers cool relatively slowly in twin-belt machines and this limits production rates. Machines with very long cooling zones are undesirable from both a mechanical and cost viewpoint so it may be better in some cases to have two machiens, one for the lot deformation, annealing and limited cooling and a second lower pressure machine for more extended cooling.

Referring now more particularly to Figure 1B and Figure 1C, there is shown an additional annealing and/or cooling apparatus, designated generally by numeral 39, wherein the sheet 13 is restrained between belts 43 and 44 trained around roller pairs 45-46 and 47-48, respectively, while being annealed, cooled or otherwise heat-treated directly after emerging from the twin belt machine 10 of Figure 1. In accordance with a preferred embodiment of the invention, the belts 43 and 44 are urged into engagement with the sheet 13 by opposed platens 49 and 50 which may be heated or cooled. The platens 49 and 50 isobarically support belts 43 and 44 on an oil film contained by dynamic peripheral seals 54 and 55. The apparatus 13 of Figures 1B and 1C provides a flexible system accommodating a number of situations. For example, some products, such as amorphous polymer, may need relatively long annealing times in which case the platens 49 and 50 of apparatus 39 may be heated.

In accordance with a further embodiment of the invention, a loop 80 of the patterned metallic foil 81 may be inserted between the belt 28 and the feedstock 11 and if desired between the belt 29 and the feedstock in order to emboss a pattern on the final sheet 13 corresponding to patterns existing on the metallic foil.

The flat sheets 13 produced by the processes and apparatus illustrated in Figures 1-7 are substantially biaxally oriented, semi-crystalline or amorphous, thermoplastic, polymer sheets which, unlike those of U.S. 4,282,277, have substantially uniform strain throughout the thicknesses thereof.

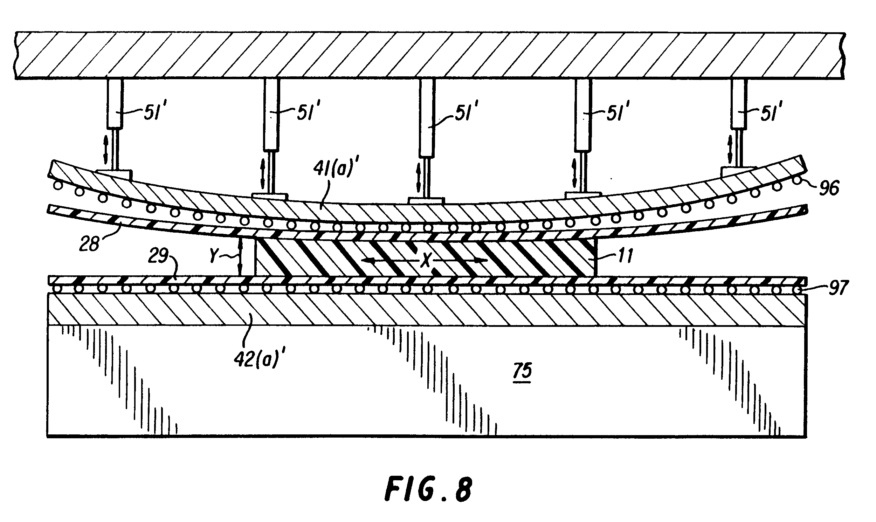

U.S. Patent Applications Serial Nos. 933,951, filed November 24, 1986 and 806,944, filed December 9, 1985, both of which are incorporated herein by reference, disclose the concept of squeezing the workpiece 11 in the Y-direction as it is spread in the X-direction more at its inboard areas than at its outboard areas. In accordance with the embodiment of the invention set forth in Fig. 8, the twin-belt machine 10 is modified by making at least the top platen 41(a) convex in cross-section along a portion of its length, with the convexity gradually decreasing to flatness at the downstream end of the working region 16. The specific geometry of the top platen 41(a)' is determined by an array of hydraulic jacks 51' distributed over the surface of the top platen. Preferably, the bottom platen 42(a)' is flat and is supported by a rigid frame 75. In the interface between the endless belts 28 and 29 and their respective platens 41(a)' and 42(a)', arrays of closely spaced roller supports, 96 and 97, respectively, are disposed to insure that the belts run freely over the platens.

The final product as exemplified by sheet 13, if made from a semi-crystalline polymer, is characterized by having a microstructure comprised of spherulitic crystalline aggregates which are compressed transversely to the plane of the product and are biaxially oriented in the plane of the product. The product is substantially devoid of any process induced microvoids and microfibrils. The product retains at least the same density as the unoriented polymer and is less permeable than a product made by conventional solid state stretching processes.

The product as exemplified by the biaxially oriented, thermoplastic sheet 13 may contain up to about sixty weight percent filler material. Prior to the advent of hydrostatically extruded BEXOR, it was very difficult, if not impossible, to produce on a commercial scale oriented thermoplastic material which contains a substantial quantity of filler material. When a semi-crystalline thermoplastic polymer contains a filler and is worked in accordance with the present invention, the thermoplastic polymer can be successfully oriented as described above and will have a structure unlike previous products, in that it is substantially devoid of microvoids and microfibrils and having within the thermoplastic polymer discrete, plateletlike, spherulitic, crystalline aggregates which are compressed transversely to the plane of the product and biaxially oriented in the plane of the sheet 13.

The sheet product 13 can be used as is for structural or like purposes, or other uses, but will in many cases be used as a blank to form final products such as, for example, solid state formed products. Many solid state formed products are so called stretch-formed products where the thermoplastic polymer is formed in a die under sufficient heat and pressure to deform the thermoplastic polymer in a solid state. The properties of the final solid state stretch-formed product will depend primarily upon the extent of deformation. However, the solid state stretch-formed products made from the biaxially oriented sheet blanks of the invention have superior properties compared with the properties of similar products made from unoriented thermoplastic polymer. For example, stretch-formed products made from the biaxially oriented thermoplastic polymer sheet blanks of the invention will have a more uniform cross section since the superior properties of the oriented thermoplastic polymer prevent the thermoplastic polymer from "necking" down appreciably. The resulting product is thus more uniformly stiff than would otherwise be the case. The actual properties of the stretch-formed product may vary from place to place in the product depending upon the amount of work or deformation applied to any given portion of the product. Any flanges on the product, being substantially unworked, will have the same superior characteristic properties as the original biaxially oriented blank. In some products this is very important as the flanges provide important structural strength and toughness. The lips or flanges around the edges of refrigerator freezer door liners, freezer food containers, pans or tote boxes are representative of this type of product. Likewise, any portion of the product which is expanded by stretching will have enhanced property characteristics over the original oriented blank material. Therefore, products made from the biaxially oriented blanks of the invention will usually have very significant portions which have superior properties compared to products made from an unoriented thermoplastic polymer, filled or unfilled, of the same composition.

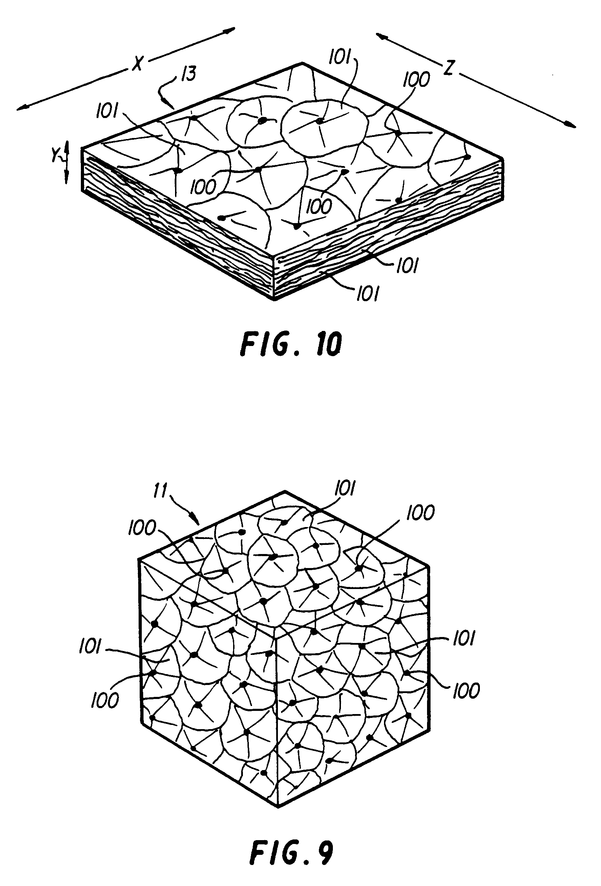

By way of example only and as is set forth in U.S. Patent No. 4,282,277, a typical structure of a polymer, which in this instance is isotactic polypropylene used as the starting polymer forming feedstock 11, is shown pictorially in Figure 9. The structure of the biaxially oriented sheet 13 is shown pictorially in Figure 10.

In the unoriented feedstock 11 of Figure 9, it is seen that crystal growth started from nuclei 100 and folded chain crystals 101 grew radially until meeting adjacent crystals forming an array of rosettelike patterns. In the biaxially oriented sheet 13, the crystals are flattened, overlapped and interlocked forming a laminar structure.

If the polymer feedstock is polypropylene, it might, for example, have an initial thickness of 0.5 inches (12.7 mm) with the biaxially oriented sheet 13 having a thickness of approximately one-tenth of an inch (2.54 mm).

The polypropylene utilized has approximately 65-70% crystallinity. Density measurements indicate that there are little or no changes in crystallinity from the feedstock 11 to the sheet 13, the only change being in morphology.

With respect to amorphous polymers such as PMMA, PVC and polycarbonate, biaxial orientation improves impact strength by absorbing impact energy through delamination in contrast to energy absorbed by puncture or through cracking as is the case with unoriented polymers.

Initial markets for products produced by the apparatus and method of the instant invention are ballistic shields, formed articles requiring superior physical and mechanical properties, and punched strips to produce terminal boards for the electronics industry.

In essence, the invention in its preferred embodiment is directed to a process for the continuous production of rectangular, relatively rigid, thermoplastic sheets 13 having substantially uniform thickness in the range of 0.03 inches (0.76mm) to 0.5 inches (2.7mm) and a thickness-to-width ratio less than about 0.04. The sheets consist of a compressively, biaxially oriented structure with essentially the same orientation ratio in all planes of the sheets. The sheets 13 have the combined properties of high strength, stiffness, low temperature impact and uniform thermal expansion. In essence, the sheets 13 are made by solid-state, continuous wedge forming of rectangular slabstock 11 between two flat converging belts 28 and 29 followed by substantially immediate post treatment in zone 17 between parallel belts 28, 29 to stabilize the product structure at the biaxial orientation ratio desired. The slabstock, which may contain up to 60% by weight of filler simultaneously spreads in both the transverse and longitudinal directions while between the belts 28 and 29 to produce a biaxially oriented sheet structure with an elongation in both directions of at least 100%.

The process is capable of producing a continuous sheet of indeterminant length. However, the sheets may be discontinuous with the length of each sheet 13 being more than 20 feet (6.1m) in order to provide discrete sheets which can be conveniently handled and if necessary cut into shorter lengths for whatever purposes desired. The apparatus 10 continues to operate and maintain its temperature and pressure parameters in the intervals between insertion of billets in the production of discrete sheets 13.

The sheets 13 produced by the process of this invention ordinarily are rectangular in cross-section and in the plane of the sheet are formed of a semi-crystalline thermoplastic polymer which is biaxially oriented. The sheets 13 have a density which is equal to, or greater than, the density of the unoriented polymer and have a microstructure substantially devoid of process-induced microvoids and microfibrils. As is seen in Figure 10, each of the sheets 13 are comprised of compressed, plateletlike, crystalline aggregates 101, which are biaxially oriented in the plane of sheet extent with the sheets having a substantially uniform distribution of deformed crystalline aggregates over the length and width thereof and through the thickness thereof.

The sheets of this invention are preferably produced as continuous, rectangular, polymer sheets of substantially uniform thickness with each of the sheets being comprised of a biaxially oriented, semi-crystalline, thermoplastic polymer having a density which is at least equal to the density of the polymer in the unoriented state. Each sheet has a microstructure substantially devoid of process-induced microvoids and microfibrils, and being further comprised of discrete, platelike, crystalline aggregates formed from compressed, originally spherulitic aggregates; which aggregates are biaxially oriented in the plane of the sheet extent. Each sheet has substantially uniformly deformed crystalline aggregates over the length and width thereof and through the thickness thereof, resulting in a sheet which is thermally stable with substantially constant mechanical and physical properties in all planes.

Each sheet preferably has a thickness from about 0.03 inches (0076mm) to about 0.5 inches (12.7mm) e.g., 0.05 inches (1.27mm) to 0.3 inches (7.62mm) preferably, with a thickness-to-width ratio less than about 0.04, e.g., 0.001 to 0.01, preferably. The sheets are produced in lengths of at least 20 feet (6.1m), optionally, but preferably for some end uses.

The sheet may contain filler material included therein which comprises up to 60% by weight of the sheet.

In one aspect of the invention, rectangular, biaxially oriented sheet is continuously produced from a thermoplastic amorphous polymer, the sheet having a density which is at least equal to the density of the unoriented amorphous thermoplastic polymer. This amorphous sheet has a substantially uniform distribution of strain over the length and width thereof, and through the thickness thereof, and has substantially constant mechanical and physical properties in all planes.

Orientation ratios in the range of 1.5 to 4.0 are generally considered most desirable for materials such as, for example, polypropylene. To achieve these orientation ratios, it is necessary to utilize machinery capable of maintaining pressures on the order of 1000 psi (70.3 kg/cm²). Such machines as the twin belt machines marketed by Kurt Held and Edward Kusters of the German Federal Republic can maintain such pressures; however, these machines require modification to incorporate a high pressure, fixed angle entry zone. Materials such as polyethylene, ultra high molecular weight polyethylene, polypropylene, and amorphous polyvinyl chloride have been successfully biaxially oriented to orientation ratios above 2.0 at pressures between 650 psi (45.7 kg/cm²) and 1000 psi (70.3 kg/cm²). At these pressures, materials such as polymethylmethacrylate which is an amorphous material, and polyacetal homopolymer which is a semi-crystalline material, have also been biaxially oriented.

Without further elaboration, it is believed that one skilled in the art can, using the preceding description, utilize the present invention to its fullest extent. The following preferred specific embodiments are, therefore, to be construed as merely illustrative, and not limitative of the remainder of the disclosure in any way whatsoever.

In the preceding text and the following examples, all temperatures are set forth uncorrected in degrees Celsius and all parts and percentages are by weight; unless otherwise indicated.

The following are illustrative examples of the twin-belt forging of polypropylene into biaxially oriented sheet in accordance with this invention.

### Example 1

Isotactic polypropylene slabs of Himont Corporation HE6023, produced by melt extrusion, were cut into strips 13.2 centimeters (5.2 inches) wide and 30 centimeters (11.8 inches) long. The thickness of the strips was 1.27 centimeters (0.50 inches). The strips had a density of 0.903, a crystallinity of 67.8% and peak crystalline melting temperature of 169°C (336°F) determined by differential scan calorimetry (D.S.C.). A melt flow index of 0.4 dgm/min was measured on material machined from the slabs.

The surfaces of the strips were lightly scored in a one centimeter square (0.39 inches) grid pattern. The gridded strips were heated in an air circulating oven for 60 minutes at an indicated temperature of 146°C (295°F) and placed on the bottom belt of a twin-belt machine with the center line of the length of the strip along the center line of the belt and parallel to the machine length. The machine had the following dimensions - Deformation zone length 19.5 centimeters (7.7 inches), Deformation angle 3.14°, Parallel zone 31.0 centimeters (12.2 inches), Belt width 66.0 centimeters (26.0 inches), Belt spacing at feed rolls 5.8 centimeters (2.3 inches), Belt Spacing at exit (downstream) rolls 0.2 centimeters (0.08 inches). The machine differed from that shown in Figure 1 in that the parallel zone was not supported by platens.

Two strips with butted ends were fed through the twin belt machine described above at a belt speed of 1.2 meters/minute (3.9 feet/minute). The machine was stopped when the first strip had emerged from the downstream rolls and the second strip was completed contained within the deformation and parallel zones of the machine. The machine was force air cooled to ambient temperature. On removal of the cooled strip from the machine, it was found to be substantially, uniformly, biaxially oriented at the end of the deformation zone.

Measurements of the grids mentioned above showed a machine direction grid length of 2:32 centimeters (0.91 inches) and a transverse grid length of 2.00 centimeters (0.79 inches). Thus, the ratio of the orientation in the machine to the transverse direction was 1.16 to 1.

Since the parallel zone was unsupported in this test, some relaxation of the orientation ration in this zone was apparent. By conducting the above example on otherwise identical equipment which has adequate belt support in the parallel zone, e.g., as shown in Fig. 1, this relaxation is prevented and a cooled product having the orientation ratio described above can be produced.

### Example 2

An experiment identical to that described in Example 1 above was run with the deformation angle reduced from 3.14° to 2.48°. Measurement of the grids after deformation showed a machine direction grid length of 2.00 centimeters (0.79 inches) and a transverse grid length of 2.33 centimeters (0.92 inches). Thus, the ratio of orientation in the machine to the transverse direction was 0.86 to 1.

From the above examples, it is apparent that, for uniform equal biaxial orientation of polypropylene strip under the conditions described, the angle of deformation lies between 3.14° and 2.48°.

Following the approach of the foregoing examples, sheets were formed from high density polyethylene, ultra-high molecular weight polyethylene, polyacetal, -PVC and polymethylmethacrylates. (Filled polymer sheets can also be formed, for example, from polypropylene containing 30 parts by weight micaflakes or talc or 40 parts calcium carbonate or 60 parts alumina trihydrate flame retardant.)

From the foregoing description, one skilled in the art can easily ascertain the essential characteristics of this invention, and without departing from the spirit and scope thereof, can make various changes and modifications to the invention to adapt it to various usages and conditions.

Theoretically, the aforedescribed process and apparatus can produce flat sheet of any width. A sheet having a width of forty-eight inches can accommodate a host of existing situations for transport, storage, structures, and processing machinery. A forty-eight inch sheet may be conveniently produced from a billet or blank which is eighteen inches wide and half an inch thick. Sheet width is limited only by mechanical limitations in the belt equipment.

With the twin-belt arrangement, friction between the opposed belts and workpiece has only a spreading component since the work piece is carried longitudinally at the same speed as the twin belts. Reduction of this spreading or lateral friction component can be accomplished by a number of approaches. Inserting low friction polymer films made of a material such as TEFLON or polypropylene between the belts and workpiece can be accomplished by simply feeding the films between the belts and workpiece from rolls positioned at the entrance of the twin belt machine. Lubricants may be dispersed on the surfaces of the belts and/or on the workpiece or lubricating additives may be added to the polymer itself.

The process described has been mathematically modeled by proposing a constitutive equation to describe polymer deformation behavior and incorporating lateral, flow finite element analysis. It is found that the biaxial orientation ratio (B.O.R.) of the polymer in the deformation zone of a twin belt machine can be expressed as a function of the following parameters:${\text{B.O.R. = g(W}}_{\text{o}} {\text{,}}_{\text{t}} {\text{, ϑ, λ, V}}_{\text{b}} \text{, T) where}$
- Wₒ =: Width of slabstock feed;
- λₜ =: Thickness reduction after deformation;
- ϑ =: Wedge angle in the deformation zone;
- µ =: Coefficient of belt to polymer friction;
- V_{b} =: Belt speed; and
- T =: Belt and polymer temperature

## Claims

1. A method of producing biaxially oriented polymer product (13) by introducing solid polymer feedstock (11) in an axial direction between at least a pair of moving opposed endless surfaces (28 and 29) and biaxially orienting the material (11) by simultaneously elongating the material (11) in a longitudinal direction (z) while spreading, the material (11) in a lateral direction (x) by reducing the thickness of the material while advancing the material (11) with the surfaces (28 and 29) as the surfaces move and maintaining the temperature of the feedstock (11) and surfaces (28 and 29) between the glass transition temperature and the viscous flow temperature of the polymer thereof as the feedstock (11) is being biaxially oriented and restraining the feedstock (11) after it has been reduced in thickness to that of the polymer product (13) for a period of time sufficient to stabilize the morphology and configuration thereof, characterized in that the moving opposed endless surfaces (28 and 29) converge in a downstream direction at an angle (α) in the approximate range of greater than zero degrees and less than 6 degrees.

2. The method of claim 1, wherein the moving surfaces (28 and 29) converge towards one another at an angle (α) in the approximate range of 2.48 degrees and 3.14 degrees.

3. The method of claim 2, wherein the moving surfaces (28 and 29) are heated to a temperature level between the glass transition temperature and the viscous flow temperature of the polymer prior to initiating the process.

4. The method of claim 1, wherein the polymer is a semicrystalline polymer.

5. The method of claim 4, wherein the polymer is selected from the group consisting of polypropylene, polyethylene, ultrahigh-molecular weight polyethylene, polyacetal, polyamide, polyethylene terephthalate and polybutylene terephthalate.

6. The method of claim 1, wherein the polymer is an amorphous material.

7. The method of claim 6, wherein the amorphous material is selected form the group consisting of polyvinyl chloride, polymethylmethacrylate, polycarbonate and polyethylene terephthalate.

8. The method of claim 1, wherein the process is continuous and the step of restraining the feedstock (11) occurs immediately after the step of deforming the material.

9. The method of any one of claims 1 through 8, wherein the polymer product (13) is in the form of a sheet and wherein the solid polymer feedstock is rectangular in cross section.

10. The method of any one of claims 4, 5 and 8, wherein the polymer product is in the form of a sheet (13) and the feedstock (11) has inboard and onboard portions and wherein the friction between the material and opposed endless surfaces is compensated for by squeezing the material more at inboard than onboard portions.

11. The method of claim 1, wherein the moving opposed endless surfaces are on belts.

## Patentansprüche

1. Verfahren zur Herstellung eines biaxialorientierten polymeren Produktes (13) durch Zuführung eines festen polymeren Ausgangsmaterials (11) in einer axialen Richtung zwischen mindestens einem Paar sich bewegender gegenüberliegender endloser Oberflächen (28 und 29) und biaxialer Orientierung des Materials (11) durch gleichzeitige Verlängerung des Materials (11) in einer Längsrichtung (z) beim Ausdehnen des Materials (11) in einer seitlichen Richtung (x) durch Reduzierung der Materialdicke während des Fortbewegens des Materials (11) mit den Oberflächen (28 und 29), wenn sich die Oberflächen bewegen, und Beibehalten der Temperatur des Ausgangsmaterials (11) und der Oberflächen (28 und 29) zwischen der Glasumwandlungstemperatur und der viskosen Fließtemperatur des Polymeres, während das Material (11) biaxial ausgerichtet wird, und Zurückhalten des Ausgangsmaterials (11), nachdem seine Dicke auf die Dicke des polymeren Produktes (13) reduziert ist, für eine ausreichende Zeitspanne, um dessen Morphologie und Konfiguration zu stabilisieren, dadurch gekennzeichnet, daß die gegenüberliegenden beweglichen endlosen Oberflächen (28 und 29) in Stromabwärtsrichtung mit einem Winkel (α) in einem Näherungsbereich von größer als Null Grad und weniger als 6 Grad zusammenlaufen.

2. Verfahren nach Anspruch 1, wobei die beweglichen Oberflächen (28 und 29) aufeinander mit einem Winkel (α) in einem Näherungsbereich von 2.48 Grad bis 3.14 Grad zusammenlaufen.

3. Verfahren nach Anspruch 2, wobei vor dem Beginn des Prozesses die beweglichen Oberflächen (28 und 29) auf ein Temperaturniveau zwischen der Glasumwandlungstemperatur und der viskosen Fließtemperatur des Polymers erhitzt werden.

4. Verfahren nach Anspruch 1, wobei das Polymer ein semikristallines Polymer ist.

5. Verfahren nach Anspruch 4, wobei das Polymer aus der Gruppe ausgewählt wird, die aus Polypropylen, Polyethylen, ultrahochmolekularem Polyethylen, Polyacetal, Polyamid, Polyethylenterephthalat und Polybutylenterephthalat besteht.

6. Verfahren nach Anspruch 1, wobei das Polymer ein amorpher Stoff ist.

7. Verfahren nach Anspruch 6, wobei der amorphe Stoff aus der Gruppe ausgewählt wird, die aus Polyvinylchlorid, Polymethacrylat, Polykarbonat und Polyethylenterephthalat besteht.

8. Verfahren nach Anspruch 1, wobei der Prozeß kontinuierlich ist und der Schritt des Zurückhaltens des Ausgangsmaterials (11) unmittelbar nach dem Deformieren des Materials stattfindet.

9. Verfahren nach einem der Ansprüche 1 bis 8, wobei das polymere Produkt (13) plattenförmig ist und der Querschnitt des festen polymeren Ausgangsmaterials rechteckig ist.

10. Verfahren nach einem der Ansprüche 4, 5 und 8, wobei das polymere Produkt (13) plattenförmig ist und das Ausgangsmaterial (11) aus Innen- und Außenabschnitten besteht und wobei die Reibung zwischen dem Material und den gegenüberliegenden endlosen Oberflächen durch stärkeres Auspressen der Innen- als der Außenabschnitte des Materials kompensiert wird.

11. Verfahren nach Anspruch 1, wobei die sich bewegenden gegenüberliegenden endlosen Oberflächen auf Bändern sind.

## Revendications

1. Procédé pour produire un produit (13) à base de polymère orienté selon deux axes, selon lequel on introduit une charge polymère solide (11) selon une direction axiale entre au moins deux surfaces sans fin opposées en mouvement (28, 29) et on oriente le matériau (11) selon deux axes en allongeant le matériau (11) dans une direction longitudinale (z) alors que l'on étire simultanément le matériau (11) dans une direction latérale (x) en réduisant l'épaisseur du matériau pendant que le matériau (11) avance au moyen des surfaces (28, 29) alors que les surfaces sont en mouvement, la température de la charge (11) et des surfaces (28, 29) étant maintenue entre la température de transition vitreuse et la température d'écoulement visqueux du polymère pendant que la charge (11) est orientée selon deux axes, et la charge (11) est retenue après que son épaisseur a été réduite jusqu'à celle du produit polymère (13) pendant une durée suffisante pour stabiliser la morphologie et la configuration de ce dernier, caractérisé en ce que les surfaces sans fin opposées en mouvement (28, 29) convergent dans le sens de la progression de la charge sous un angle (α) dans la gamme approximative de plus de 0 degré à moins de 6 degrés.

2. Procédé selon la revendication 1, dans lequel les surfaces en mouvement (28, 29) convergent l'une vers l'autre sous un angle (α)dans la gamme approximative de 2,48° à 3,14°.

3. Procédé selon la revendication 2, dans lequel les surfaces en mouvement (28, 29) sont chauffées à une température entre la température de transition vitreuse et la température d'écoulement visqueux du polymère avant de commencer à mettre en oeuvre le procédé.

4. Procédé selon la revendication 1, dans lequel le polymère est un polymère semi-cristallin.

5. Procédé selon la revendication 4, dans lequel le polymère est choisi parmi le polypropylène, le polyéthylène, le polyéthylène de ultra-haut poids moléculaire, un polyacétal, un polyamide, le polyéthylène téréphtalate et le polybutylène téréphtalate.

6. Procédé selon la revendication 1, dans lequel le polymère est un matériau morphe.

7. Procédé selon la revendication 6, dans lequel le matériau amorphe est choisi parmi le groupe du poly(chlorure de vinyle), le poly(méthacrylate de méthyle), un polycarbonate et le polyéthylène téréphtalate.

8. Procédé selon la revendication 1, qui opère en continu et dans lequel l'étape de retenue de la charge (11) a lieu immédiatement après l'étape de déformation du matériau.

9. Procédé selon l'une quelconque des revendications 1 à 8, dans lequel le produit polymère (13) est sous forme d'une feuille et dans lequel la charge polymère solide est de section rectangulaire.

10. Procédé selon l'une quelconque des revendications 4, 5 et 8, dans lequel le produit polymère est sous forme d'une feuille (13) et la charge (11) possède une partie centrale et des parties extrêmes, et dans lequel le frottement entre le matériau et les surfaces sans fin opposées est compensé en appliquant au matériau une pression supérieure sur la partie centrale que sur les parties extrêmes.

11. Procédé selon la revendication 1, dans lequel les surfaces sans fin opposées au mouvement se trouvent sur des rubans.
